# EUROPEAN PATENT SPECIFICATION

(11) **EP 2 130 442 B1**
(45) Date of publication and mention of the grant of the patent: **17.01.2018**
(21) Application number: 08010346.8
(22) Date of filing: 06.06.2008
(51) Int. Cl.: A23L 5/10, A23L 19/18, A23L 33/20, A23L 33/00, A23P 20/15

(54) **Low fat potato chips and method for production**
Fettarme Kartoffelchips und Herstellungsverfahren
Frites à faible teneur en matières grasses et procédé de production

(43) Date of publication of application: 09.12.2009
(73) Proprietor: Estrella Maarud Holding AS, Oslo (NO)
(72) Inventor: Grigonis, Domantas, 51306 Kaunas (LT); Andersson, Anders, 42354 Torslanda (SE)
(74) Representative: Hoffmann Eitle

(56) References cited:
- EP-A- 1 430 788
- WO-A-2007/041682
- US-A- 3 597 227
- US-A- 4 283 425
- US-A- 4 721 625

## Description

### Technical Field of the Invention

The present invention is directed to potato chips having a reduced fat content. In particular, the present invention is directed to a process for producing potato chips involving a blanching step, a coating step, a frying step and an oil-removing step. The process is capable of reducing the fat content whilst improving or at least maintaining the organoleptic properties of the potato chips.

### Background of the Invention

With consumers becoming more health sensitive, there has been an increasing demand for food products having a reduced fat content. To satisfy this demand, several attempts have been made to reduce the fat content in deep fried comestibles, such as potato chips or fries.

One approach that has been made includes the treatment with superheated steam.

For instance, US 4,933,199 discloses a process for the continuous preparation of low oil potato chips comprising the steps of partially frying the potato slices, de-oiling the slices to an oil content of less than 25 % by weight based on the total weight of the de-oiled slices by means of superheated steam in a reduced oxygen environment and dehydrating the potato slices to the desired moisture content. The oil content of the chips is 19.8 % by weight or more.

Similarly, WO 2006/047129 teaches a process for producing low oil potato chip products which combines contacting the chip with a brine solution, frying, and concurrently dehydrating and de-oiling. A fat content of 30 % by weight or less based on the total weight of the unseasoned chip is obtained.

EP 1 900 289 discloses a process comprising the steps of blanching the potato slices with a solution comprising divalent cations, frying the slices and de-oiling. This process results in a reduction of the fat content to below 19 % by weight based on the weight of the fried potato product after frying and de-oiling.

Another approach, which is mainly used in potato fries industry, involves starch based coatings. A broad variety of coating compositions and methods has been disclosed. Such coatings have rarely been used in the production of potato chips for various reasons, e.g. complicated frying. When used on potato chips, these coatings resulted in unsatisfactorily low reduction of the oil content which can also be achieved by other means like de-oiling with superheated steam in a more convenient and economic process.

For example, US 3,751,268 discloses coating with an ungelatinized unmodified high amylose starch and subsequently gelatinizing said starch.

EP 0 645 968 discloses a process wherein the raw comestible is coated with a mixture comprising ungelatinized amylose and calcium. Subsequently, the comestibles are subjected to blanching, dehydrating and parfrying.

US 5,750,168 provides a coating for potato strip products comprising not less than 20 % by weight of ungelatinized crosslinked tapioca starch.

According to WO 03/065824, potatoes are blanched using an aqueous solution containing reduced dextrin before frying.

US 5,620,727 teaches that the oil content of a fried product, such as fries, may be reduced by blanching with calcium and applying a hydrocolloid coating. The preferred coating agent is pectin.

Yet another commercially available approach of reducing oil content by 30-40% in fried products is based on centrifugation of hot fried comestible and removal of excess oil with gravity field. This approach has been successfully commercialized by Heat and Control, Inc. or BMA Netherlands B.V. companies, but it has a significant drawback of small processing capacity per centrifuge unit and higher chips breakage resulting from processing.

EP 1 430 788 A1 pertains to French fries with reduced fat content, produced by applying a layer of a hydrocolloid to potato strips, crosslinking such hydrocolloid, and coating the hydrocolloid with a starch product prior to frying.

WO 2007/041682 A1 describes a method of making reduced-fat or fat-free French fries by coating potato strips with an aqueous adhesion mixture including a protein, and an oil absorption minimizing agent including an edible lipophilic material, where the coating is adhered to the potato strips.

US 3,597,227 discloses a process for preparing deep fried potato chips, said process comprising the coating of potato slices, prior to the deep frying thereof in a hot cooking oil, with an aqueous dispersion of a high amylose starch.

US 4,283,425 relates to potato chips having an added fat content of up to about 10 %, prepared by coating raw potato slices with a globular protein, applying a layer of edible oil on top of the protein coating and subjecting the raw coated slices to microwave heating.

US 4,721,625 describes a process for preparing low fat potato chips comprising frying peeled raw potato chips in oil to produce partially fried potato slices having a moisture content of about 10 to 25 % by weight, transferring the partially fried potato slices directly into a zone in which they are protected against oxidation, removing the oil from the surfaces of the partially fried potato slices, and drying to a moisture content of 1.5 to 3.0 %.

In spite of these various attempts, there is presently no commercial technology which allows the manufacture of deep potato chips having a fat content which has been reduced by more than 50 % compared to a regular product.

In view of the above, it is an object of the present invention to provide a process for producing deep fried potato chips having a reduced fat content such as less than 14 % by weight, based on the total weight of the product prior to seasoning, while retaining an excellent taste and a crispy texture, which process can be applied to a standard chips manufacturing line equipped with a steam de-oiling unit without requiring high investment.

### Summary of the Invention

The above object is solved by the present invention which, in a first aspect, provides a process for producing potato chips comprising the following step:
a) blanching potato slices having a thickness of 0.8 to 3.0 mm with a solution comprising divalent cations;
b) wet-coating the potato slices with an aqueous gelatinized starch-based coating solution;
c) deep frying the potato slices; and
d) de-oiling the potato slices, preferably by applying superheated steam,
wherein the starch in the coating solution is white dextrin, and wherein steps a) to d) are conducted in this order.

In a further aspect of the invention, potato chips are provided that are obtainable by said process and have a fat content of below 15% by weight and a moisture content of 5% by weight or less.

Surprisingly, the inventors found that the combination of a blanching step and a step of coating with a starch-based coating in the process of the invention is capable of synergistically reducing the oil content of the final potato chips below the sum of the reductions in oil content which are obtained when either a blanching step or a coating step is carried out.

Following below, all percentages are by weight based on the fried and de-oiled product prior to an optional application of seasoning, unless otherwise stated.

In relation to the present invention, the terms "fat content" and "oil content" are used interchangeably.

Preferred embodiments will become evident from the attached claims and the detailed description.

### Drawing

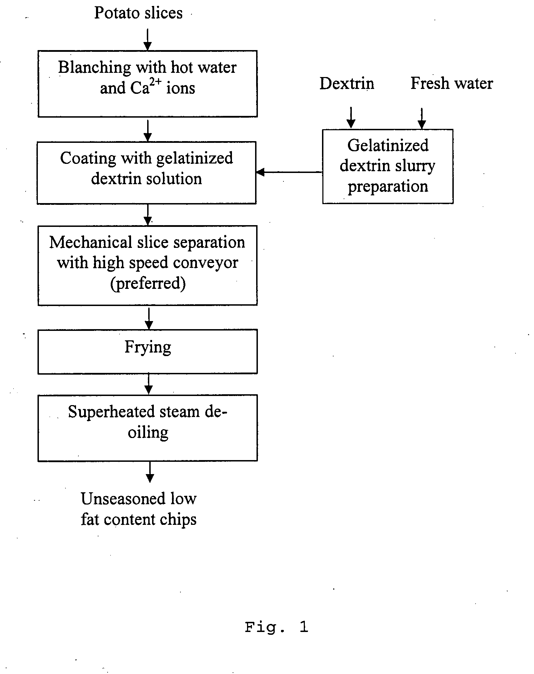

Figure 1 is a flow diagram showing an exemplary process layout in accordance with the invention which allows the production of reduced fat potato chips.

### Detailed Description of the Invention

### Process

The process according to the invention allows the production of deep fried potato chips having a fat content which is significantly lower than the one according to the prior art. For instance, the fat content of regular potato chips usually is 34 to 36 % by weight. Currently commercially available reduced fat potato chips with seasoning have a fat content of 16.5-24%, corresponding to 17-26% fat in the unseasoned product. The fat content of potato chips obtainable by the process according to the present invention is usually lower than 15 % by weight, or lower than 14 % by weight, preferably in the range of 10 to 13 % by weight. In other words, it is possible to reduce the fat content by about 60 to 70 % compared to a regular product.

The process imparts a pleasant taste, a crispy texture and a less oily aftertaste to the products.

### Food products

The process according to the present invention is directed to producing potato chips. They are provided in the form of pieces which have the shape of slices. The thickness of the slices is 0.8 to 3.0 mm, preferably 1.2 to 2.0 mm, most preferably 1.6 to 1.8 mm.

When preparing potato chips, all potato varieties commonly known as chipping varieties are suitable as starting material for the process. Such varieties are known to the skilled person and usually have a reducing sugar content below 0.30 % by weight in general, preferably below 0.15 % and most preferably 0.05 to 0.10 % by weight. Nevertheless, other potato varieties can be used in the process of the invention as well. The dry matter content preferably is in the range from 20 to 25 % in general, preferably 23 to 25 %. Prior to the blanching step the surface starch is preferably washed off from the potato slices.

### Blanching

In relation to the present invention, the term "blanching" describes a treatment step wherein the potato slices are plunged into, or otherwise contacted with, a hot aqueous solution and removed after a certain time interval.

The potato slices are blanched with an aqueous solution containing divalent cations. As the present invention is directed to food processing, it is understood that said divalent cations and the corresponding counter-ions present in said aqueous solution are compatible with the metabolism of human beings and do not have adverse effects on human health, i.e. they are food grade divalent cations with corresponding counter-ions. Examples of suitable divalent cations are alkaline earth metal cations, such as Mg²⁺ and Ca²⁺, preferably Ca²⁺. A combination of two or more different divalent cations may be used.

The corresponding counter-ions may be selected from, for instance, chloride, fluoride, bromide, sulfate, carbonate, and hydrogen carbonate, anions derived from carboxylic acids, such as citrate, ascorbate, acetate, lactate, propionate, and benzoate. A usual and preferred counter-ion is chloride. A preferred combination of divalent cation and counter-ion is represented by calcium chloride, i.e. CaCl₂. A combination of two or more different salts may be used.

The concentration of said divalent cation in said aqueous solution, calculated in terms of CaCl₂, is generally 0.05 to 2.0 % by weight, preferably 0.15 to 0.7 % by weight, more preferably 0.30 to 0.60 % by weight, most preferably 0.45 to 0.55 % by weight. If a divalent cation is used in a form different from CaCl₂, the weight percentages given above are converted so as to correspond to an equimolar amount of the divalent cation.

Blanching is preferably carried out at temperatures between 60 to 100 °C, more preferably 65 to 90 °C, most preferably 70 to 85 °C.

The potato slices are treated with the aqueous solution by immersion, wherein the solution is preferably pre-heated to the blanching temperature.

The temperature and divalent cation concentration are preferably kept constant during the treatment. The dwell time of the potato slices in the blanching solution is in the range of from 0.1 to 5 minutes, preferably 0.5 to 3 minutes, more preferably 1 to 2 minutes, most preferably 1.5 to 2 minutes.

At a temperature of 70 to 80 °C, the preferred dwell time is 1.5 to 2 minutes at a divalent cation concentration of 0.45 to 0.55 %, but it is to be understood that the process parameters may depend on other aspects such as potato variety, its reducing sugar content and dry matter content.

While not wishing to be bound by theory, it is assumed that by the treatment with divalent cations the intercellular forces are improved, i.e. the cells are "glued" together. Presumably, divalent cations can bind free carboxyl groups on adjacent pectin polymers and link them, thereby creating a more stable three-dimensional network and imparting additional firmness to the tissue. Thus, less degradation of cell wall material and middle lamella occurs if the potato slices are blanched with a solution containing divalent cations, for instance calcium cations. The presence of divalent cations also has an impact on starch gelation. Divalent cations seem to retard the swelling and rupture of starch granules, allowing the leakage of amylose, but not amylopectin, out of the starch granules. The amylose chains will then link to the cell walls and may also improve the cell wall strength and thereby cause less holes and cracks during the frying process.

### Coating

After blanching, the potato pieces are wet-coated with an aqueous gelatinized starch-based coating solution, wherein the starch is white dextrin.

Minimal gelatinized coating viscosity has to be considered, as a high coating viscosity will result in a thick coating on the slices and sticking of the slices together, which is undesirable. A gelatinized starch based ingredient coating, as compared to a non-gelatinized ingredient coating, seems to result in a better penetration of the coating into cracks within potato tissue, a more uniform distribution on the slices surface, better product textural properties resulting in less hard bite and slow lamination rate of the coating solution. The coating should adhere well to the surface of the potato pieces, thereby allowing further processing of the coated product.

White dextrin is a derivative of native potato starch which has been modified by heat in the presence of a small amount of an acid catalyst. Gelatinized white potato dextrin solutions have a low viscosity at a concentration of up to 30 % dry solids within the temperature range employed in the coating step, thereby ensuring an easy workability. The consistency of these solutions also provides for an adequate coating amount and an adequate thickness of the coating layer. Gelatinized dextrin also exhibits very good adhesive properties to the surface of the potato pieces. Finally, dextrin contains a minor amount of reducing sugars and does not affect the colour of the final product obtained.

The coating process is a wet coating process, i.e. an aqueous solution of the starch based ingredient is used. Water is the essential solvent for starch based ingredient gelatinization and solution preparation. In the present invention, an aqueous solution of gelatinized white dextrin is employed in the coating step.

Such a wet coating step may be conveniently carried out by immersion into the solution which has preferably been pre-heated to the treatment temperature.

Preferably, the viscosity of gelatinized starch based coatings is between 0.05 and 0.4 Pa·s, more preferably between 0.1 and 0.2 Pa·s, most preferably between 0.1 to 0.15 Pa·s to prevent formation of a thick layer of coating and prevent sticking of slices together. Coating viscosity is a function of starch based ingredient type, ingredient concentration in the coating solution and coating solution temperature. The concentration of the starch based ingredient in the coating solution is positively correlated with fat content reduction effect, therefore it is desired to have a concentration as high as possible. In contrast, an increase in the concentration tends to increase the viscosity, which is undesired. Therefore, workable dry solids limits for potato white dextrin solution are 10-25 % by weight, more preferably 11-18 % by weight, most preferably 14-16 % by weight.

In a particularly preferred embodiment, the coating temperature is 20 to 95°C, most preferably of 40 to 50°C. This temperature range allows to effectively suppress enzymatic discolouration of the slices.

Of course, the most effective conditions in the coating step will depend on the starch based ingredient, but those skilled in art can easily adjust the combination of temperature and concentration to arrive at the desired fat reducing effect and to prevent the formation of thick coatings.

After blanching, potato slices have a 10-20% surface water layer which has to be replaced with the coating in such a manner that slices after dipping have a surface layer with the target concentration of starch based ingredient. The time used for coating in the dipping bath needs to be sufficient to ensure equilibration of starch based ingredient concentration in the coating layer with concentration in the dipping bath. The time necessary for equilibration can appropriately be selected by the skilled person, and preferably is from 5 to 60 seconds, more preferably for 10 to 15 seconds when using a conventional dipping bath with agitation.

While not wishing to be bound by theory, it is assumed that the starch based coating fills empty cells and cavities in the tissue of the potato pieces, thereby reducing the volume which is available for oil absorption. Moreover, the preferred dextrin coating exhibits good film forming properties which result in an additional barrier which prevents oil penetration into the cavities of the tissue during frying. This reduces the speed of oil penetration into cracks and holes in the tissue and facilitates oil removal by steam during the de-oiling treatment after frying. It is believed that a similar improvement in the oil removal may be achieved when the de-oiling step is conducted by application of centrifugal force.

### Frying

In relation to the present invention, the term "frying" is directed to completely or partially submerging the potato pieces in a frying medium, such as hot oil or fat. In the art, this method is also referred to as "deep frying".

Any device suitable for frying food products can be employed in the process according to the invention. A single-zone continuous fryer and a multi-zone continuous fryer are preferred, wherein the multi-zone continuous fryer is more preferred.

Examples of the frying medium include palmolein, sunflower oil, high oleic acid sunflower oil, medium oleic acid sunflower oil, corn oil, soybean oil, partially hydrogenated soybean oil, cottonseed oil, peanut oil, low euricic acid rapeseed (canola) oil and combinations thereof, but other frying media are also conceivable.

The terms "oil" and "frying medium" are used interchangeably in relation to the present invention, although the frying medium is not necessarily an oil.

Preferably, the temperature of the frying medium is controlled such that a temperature profile is applied to the potato chips as they pass the frying medium. The inlet temperature of the frying medium is typically between 140-195 °C, preferably between than 140-160 °C, most preferably between 145-155 °C. The outlet temperature is typically between 110 and 170 °C, preferably 145 and 160 °C, more preferably 150 and 155 °C. The temperature of the frying medium at the inlet preferably exceeds 140 °C, thereby inducing evaporation of the water contained in the potato slice and surface coating at such a rate that a steam blanket surrounding the potato slice would impede slices from sticking together. Temperatures higher than 155 °C may result in more cracks and damage to potato tissue resulting in higher oil absorption. This is therefore not preferred. It is further desirable to maintain the slices separate from each other when they enter the fryer and keep them separated by means of steam blanket and oil turbulence until coating layer looses enough moisture to become non-sticky. This contributes to the prevention of clump formation.

### De-oiling

In relation to the present invention, the term "de-oiling" is directed to removing the frying medium at least partially from the fried potato pieces after they have been removed from the frying medium.

The major part of the oil contained in the potato pieces is not absorbed during the frying process. The water evaporating from the pieces forms a steam blanket around the pieces that prevents oil absorption during the frying process. However, when the pieces are removed from the frying medium, the steam inside the slices condenses due to the temperature drop and creates an under-pressure that forces the oil present on the surface of the fried pieces into the pores that have been formed during the frying process.

Potato chips having reduced oil content can be produced on a commercial scale by blowing off the surface oil or removing it by gravity force before the oil is absorbed.

During steam de-oiling, the oil is typically removed before the steam inside the slices condenses and creates an under-pressure inside the slices. For ensuring the optimum de-oiling performance, the temperature of the potato chips has to be kept sufficiently high to prevent condensing of the steam under the pressure conditions given until the oil is removed. Otherwise, the oil is likely to be forced into the product and a low fat content cannot be accomplished. For example, the potato chips may be kept at a temperature of 110 °C or higher at ambient pressure.

According to the present invention, for a de-oiling step a stream of superheated steam, saturated steam, a hot gas such as air or nitrogen can be employed as the oil-removing medium, with superheated steam being preferred.

Control of the de-oiling and dehydrating process can be achieved by adjusting the temperature of the superheated steam, the blower fan speed and the resident time in the de-oiling unit. The optimum parameters depend on chipping variety, dry matter content of the starting material for the potato chips, slice thickness, process parameters of the blanching and coating treatment, etc. In general, the temperature of the superheated steam is in the range of 150 to 190 °C, more preferably 165 to 175 °C, and the residence time is between 30 and 120 seconds, more preferably 45 and 75 seconds.

If the temperature of the oil-removing medium is lower than 150 °C, a long exposure of the fried potato pieces to said oil-removing medium may become necessary which may result in undesirable non-enzymatic browning of the final product. An exemplary de-oiling procedure is disclosed e.g. in the patent application GB 1,519,049.

### Potato chips

The potato chips obtainable by the process described herein are characterized by the fat content and the moisture content. Moreover, they may be characterized by the content of divalent cations.

The fat content of the potato chips produced in accordance with this invention is less than 15 % by weight, preferably 14 % by weight or less, more preferably in the range of from 10 to 13 % by weight (prior to seasoning).

The divalent ion concentration of the product after the de-oiling and drying step, in terms of CaCl₂, is preferably 0.1 to 0.6 % by weight, more preferably 0.2 to 0.5 % by weight, most preferably 0.35 to 0.45 %.

The moisture content of the product after the de-oiling step preferably is in the range of 5 % by weight or less, preferably 1.0 to 2.5 % by weight, more preferably 1.5 to 2.0 % by weight or less.

In general, deep fried comestibles having a low fat content tend to have a dry aftertaste. The product obtainable by the process described herein, however, has a pleasant salty aftertaste presumably owing to the blanching step according to the present invention. Furthermore, the texture of the potato products according to the present invention is crispier, presumably due to Ca²⁺ ion improved intercellular forces and dextrin coating. In other words, the process of the invention provides a pleasant taste, a crispier texture and a less oily aftertaste to the resulting products.

Hence, the present invention provides a method for producing a potato chips having improved properties, viz.
a) a fat content lower than known from the prior art while the organoleptic properties, such as taste and crispiness, are improved or at least not deteriorated; or
b) a fat content essentially equal to that known from the prior art while the organoleptic properties, such as taste and crispiness, are improved.

### Examples

The fat content of the fried potato products is analyzed by automatic direct extraction. The fat content is the amount of fat and fat-like substances extracted from the sample using petroleum ether.

In general, the sample is carefully homogenized, mixed with sea sand and extracted with petroleum ether in a Soxtec or other automatic continuous extractor. The solvent is then evaporated, the residue dried and weighed. In particular, 100 g of the sample to be analyzed are homogenized in a mixer. 3 g of the homogenized sample are weighed with an accuracy of 0.1 mg into an extraction thimble filled up to one third of the volume with sand (0.1-0.3 mm, acid-washed, washed to neutral pH and heated until glowing). Sand is poured on top of the sample, and the sample is dispersed in the sand by the use of a glass rod. The extraction thimble is placed in the extractor, and the sample is extracted with 50 ml of petroleum ether (40-65°C) in each of the extraction cups of the extractor (or adapted to the volume of the extractor). The extraction is carried out under reflux for at least one hour. The extracted fat, in the extraction cups, is dried at 102°C ± 2°C for 1 hour. After cooling in a desiccator, the weight of the cups is registered with an accuracy of 0.1 mg. Drying, cooling and weighing is repeated until a constant weight is reached. The fat content is reported as mass content in g/100 g.

The following examples are provided to more fully illustrate the invention and are not to be construed as a limitation thereof.

### Comparative Example 1 (Regular Potato Chips)

Potato chips with regular fat content were prepared by washing, de-stoning, peeling, slicing and washing potatoes with a dry matter content of 24%. The slices having a thickness of 1.4-1.6 mm were blanched in water 75 °C for 2 minutes. A multiflow fryer was used with the following temperature zones: zone 1 = 152°C, zone 2 = 154 °C, zone 3 = 155 °C, zone 4 = 151 °C and zone 5 = 150 °C, while the inlet temperature was 167 °C. The potato chips had a fat content of 36.2 % by weight prior to application of seasoning.

### Comparative Example 2 (Regular Potato Chips with dextrin coating)

The procedure of Comparative Example 1 was repeated, except that a coating step was included between the blanching and frying steps. An aqueous solution of gelatinized white dextrin having a dry solids content of 6-12 % was used. The temperature employed for coating was 45 °C. The potato chips had a fat content of 34.8-35.2 % by weight prior to application of seasoning, i.e. the coating step resulted in a maximal reduction by 3.9% in oil content compared to regular chips.

### Comparative Example 3 (Less Fat Potato Chips)

Potato chips having a reduced fat content were prepared by washing, de-stoning, peeling, washing and slicing potatoes with a dry matter content of 24 %. The slices having a thickness of 1.6 to 1.8 mm were blanched in a 0.50 % calcium chloride solution at 75 °C for 2 minutes. A multiflow fryer was used with the following temperature zones: zone 1 = 145°C, zone 2 = 151 °C, zone 3 = 152 °C, zone 4 = 146 °C and zone 5 = 140 °C, while the inlet temperature was 168 °C. The superheated steam used for de-oiling had a temperature of 175 °C, the fan speed was 55 Hz and the resident time in de-oiling unit was set to 35 seconds. The potato chips had a fat content of 17.7 % by weight prior to application of seasoning, i.e. the Ca²⁺ ion blanching and steam de-oiling step resulted in a reduction by 51.1% in oil content compared to regular chips.

### Example 4 (Less Fat Potato Chips with dextrin coating)

The procedure of Comparative Example 3 was repeated, except that a coating step was included between the blanching and frying steps. An aqueous solution of white ungelatinized dextrin having a dry solids content of 10-12 % was used. The temperature employed for coating was 50 °C. The potato chips had a fat content of 14.2 % by weight prior to application of seasoning, i.e. the coating step resulted in a reduction by 60.8 % in oil content compared to regular chips.

A comparison of Comparative Examples 1 and 2 revealed a certain fat reduction effect, i.e. an addition of 0.5-1.5 % dry solids to the potato slices in the form of starch/dextrin reduced the fat content by roughly 1 % in absolute figures, i.e. a reduction effect of 3.9 %. This is in line with the fat reduction effect that an increase in the potato slices dry matter content normally gives. There are many diagrams available that correlate dry matter content of potato tissue/slices versus fat content of fried potato chips. A comparison of Comparative Example 3 and Example 4 revealed an unexpected synergistic effect of the combination of dextrin coating and divalent ion pretreatment of potato slices. The added dextrin coating step reduced the fat content by 3.5% in absolute figures, i.e. it further reduced the fat content by 19.8% (17.7% to 14.2%). In other words, the reduction effect was considerably higher than for dextrin coating at regular production (reduction effect of 19.8% versus 3.9%). This synergistic effect may be the result of the formation of a smooth film from the gelatinized dextrin polymers over the potato slices that facilitates an efficient oil removal with the superheated steam after frying. No oil is absorbed during the frying process since a steam blanket is formed around the potato slices. After slices are removed from the fryer, negative pressure caused by cooling down tries to entrain oil into potato tissue cavities, but the dextrin film significantly slows down oil adsorption until the superheated steam is applied and blows off the surface oil. In this way, the dextrin film seems to facilitate the oil removal process.

It is derivable from the above that the coating step resulted in a greater reduction of the fat content for reduced fat potato chips than for regular ones. By the process of the present invention, it was possible to obtain potato chips having a fat content which was as low as 14-15 %. This amounts to a reduction of 60-70 % in comparison to a regular product.

## Claims

1. A process for producing potato chips comprising the following steps:
a) blanching potato slices having a thickness of 0.8 to 3.0 mm with a solution comprising divalent cations,
b) wet-coating the potato slices with an aqueous gelatinized starch-based coating solution,
c) deep frying the coated potato slices and
d) de-oiling the potato slices, preferably by applying superheated steam,
wherein the starch in the coating solution is white dextrin, and wherein steps a) to d) are conducted in this order.

2. The process according to claim 1, wherein step b) is conducted at a temperature of 20-95 °C, preferably from 40-50 °C.

3. The process according to claim 1 or 2, wherein an aqueous solution of gelatinized potato white dextrin having a dry solids content of 10-25 % by weight, more preferably 11-18 % by weight, most preferably 14-16 % by weight is used in step b).

4. The process according to any one of claims 1 to 3, wherein the divalent cations in step a) are calcium ions.

5. The process according to claim 4, wherein an aqueous solution containing CaCl₂ is used in step a).

6. The process according to any one of claims 1 to 5, wherein the concentration of divalent cations in the solution is 0.05 to 2.0 % by weight, calculated in terms of CaCl₂.

7. The process according to any one of claims 1 to 6, wherein step b) is carried out for 5 to 60 seconds, preferably 10 to 15 seconds.

8. The process of any one of claims 1 to 7, wherein the temperature in step a) is 60 °C to 95 °C, more preferably 65 °C to 95 °C, most preferably 70 °C to 85 °C.

9. Potato chips obtainable by the process of any one of claims 1 to 8 having a fat content of below 15% by weight and a moisture content of 5% by weight or less.

## Patentansprüche

1. Verfahren zur Herstellung von Kartoffelchips, umfassend die folgenden Schritt:
a) Blanchieren von Kartoffelscheiben mit einer Dicke von 0,8 bis 3,0 mm mit einer Lösung, die zweiwertige Kationen umfaßt,
b) Naßbeschichten der Kartoffelscheiben mit einer wäßrigen Beschichtungslösung auf Basis gelatinierter Stärke,
c) Fritieren der beschichteten Kartoffelscheiben und
d) Entölen der Kartoffelscheiben, vorzugsweise unter Anwendung von Heißdampf,
wobei die Stärke in der Beschichtungslösung Weißdextrin ist und wobei die Schritte a) bis d) in dieser Reihenfolge durchgeführt werden.

2. Verfahren gemäß Anspruch 1, wobei Schritt b) bei einer Temperatur von 20-95°C, vorzugsweise 40-50°C, durchgeführt wird.

3. Verfahren gemäß Anspruch 1 oder 2, wobei eine wäßrige Lösung von gelatiniertem Kartoffel-Weißdextrin mit einem Trockenfeststoffgehalt von 10-25 Gew.%, besonders bevorzugt 11-18 Gew.%, am meisten bevorzugt 14-16 Gew.%, in Schritt b) verwendet wird.

4. Verfahren gemäß irgendeinem der Ansprüche 1 bis 3, wobei die zweiwertigen Kationen in Schritt a) Calcium-Ionen sind.

5. Verfahren gemäß Anspruch 4, wobei eine wäßrige Lösung, die CaCl₂ enthält, in Schritt a) verwendet wird.

6. Verfahren gemäß irgendeinem der Ansprüche 1 bis 5, wobei die Konzentration an zweiwertigen Kationen in der Lösung 0,05 bis 2,0 Gew.%, berechnet in bezug auf CaCl₂, beträgt.

7. Verfahren gemäß irgendeinem der Ansprüche 1 bis 6, wobei Schritt b) für 5 bis 60 Sekunden, vorzugsweise 10 bis 15 Sekunden, durchgeführt wird.

8. Verfahren gemäß irgendeinem der Ansprüche 1 bis 7, wobei die Temperatur in Schritt a) 60°C bis 95°C, besonders bevorzugt 65°C bis 95°C, am meisten bevorzugt 70°C bis 85°C, beträgt.

9. Kartoffelchips, erhältlich durch das Verfahren gemäß irgendeinem der Ansprüche 1 bis 8, mit einem Fettgehalt unterhalb von 15 Gew.% und einem Feuchtigkeitsgehalt von 5 Gew.% oder weniger.

## Revendications

1. Procédé de production de chips de pomme de terre comprenant les étapes suivantes :
a) le blanchiment de tranches de pomme de terre ayant une épaisseur de 0,8 à 3,0 mm avec une solution comprenant des cations divalents,
b) le revêtement humide des tranches de pomme de terre avec une solution aqueuse de revêtement à base d'amidon gélatinisé,
c) la friture des tranches de pomme de terre revêtues et
d) le déshuilage des tranches de pomme de terre, préférablement en appliquant de la vapeur surchauffée,
dans lequel l'amidon dans la solution de revêtement est de la dextrine blanche, et dans lequel les étapes a) à d) sont réalisées dans cet ordre.

2. Procédé selon la revendication 1, dans lequel l'étape b) est réalisée à une température de 20 à 95 °C, préférablement à partir de 40 à 50°C.

3. Procédé selon la revendication 1 ou 2, dans lequel une solution aqueuse de dextrine blanche de pomme de terre gélatinisée ayant une teneur en solides secs de 10 à 25 % en poids, plus préférablement de 11 à 18% en poids, le plus préférablement de 14 à 16 % en poids est utilisée dans l'étape b).

4. Procédé selon l'une quelconque des revendications 1 à 3, dans lequel les cations divalents dans l'étape a) sont des ions calcium.

5. Procédé selon la revendication 4, dans lequel une solution aqueuse contenant du CaCl₂ est utilisée dans l'étape a).

6. Procédé selon l'une quelconque des revendications 1 à 5, dans lequel la concentration en cations divalents dans la solution est de 0,05 à 2,0 % en poids, calculée en termes de CaCl₂.

7. Procédé selon l'une quelconque des revendications 1 à 6, dans lequel l'étape b) est réalisée pendant 5 à 60 secondes, préférablement pendant 10 à 15 secondes.

8. Procédé selon l'une quelconque des revendications 1 à 7, dans lequel la température dans l'étape a) est de 60 °C à 95 °C, plus préférablement de 65 °C à 95 °C, le plus préférablement de 70 °C à 85 °C.

9. Chips de pomme de terre pouvant être obtenues par le procédé selon l'une quelconque des revendications 1 à 8 ayant une teneur en graisse de moins de 15 % en poids et une teneur en humidité de 5 % en poids ou moins.
